# FASCICULE DE BREVET EUROPEEN

(11) **EP 2 678 193 B1**
(45) Date de publication et mention de la délivrance du brevet: **10.12.2014**
(21) Numéro de dépôt: 12706646.2
(22) Date de dépôt: 30.01.2012
(51) Int. Cl.: B60R 21/34

(54) **ENSEMBLE COMPORTANT UN CAPOT DE VEHICULE AUTOMOBILE EQUIPE D'UNE GACHE RELIEE A CE CAPOT PAR DES PATTES DEFORMABLES EN CAS DE CHOC PIETON**
ANORDNUNG MIT EINER KRAFTFAHRZEUGHAUBE UND MIT EINEM MIT DIESER HAUBE ÜBER IM FALLE DES ZUSAMMENSTOSSES MIT EINER PERSON VERFORMBARE LASCHEN VERBUNDENEN KEIL
ASSEMBLY COMPRISING A MOTOR VEHICLE HOOD AND PROVIDED WITH A STRIKER CONNECTED TO SAID HOOD VIA LUGS THAT CAN DEFORM IN THE EVENT OF PEDESTRIAN IMPACT

(30) Priorité: 21.02.2011 FR 1151376
(43) Date de publication de la demande: 01.01.2014
(73) Titulaire: PSA Peugeot Citroen Automobiles S.A., 78140 Velizy Villacoublay (FR)
(72) Inventeur: JEANNEAU, Clement, F-92100 Boulogne Billancourt (FR); BRUNET MANQUAT, David, F-78220 Viroflay (FR)
(74) Mandataire: Fosse, Danièle
(86) Numéro de dépôt international: PCT/FR2012/050188
(87) Numéro de publication internationale: WO 2012/114010

(56) Documents cités:
- EP-A1- 2 163 460
- DE-A1- 10 308 371
- DE-T5-112004 000 307
- FR-A3- 2 916 730

## Description

La présente invention concerne un ensemble comportant un capot avant de véhicule automobile équipé d'une gâche qui est reliée à ce capot par des pattes métalliques déformables en cas de choc d'un piéton sur ce capot.

L'invention concerne également un véhicule automobile équipé d'un tel ensemble.

Un ensemble de ce type a été décrit par exemple dans les brevets FR 2 836 879 et US 2007/7235237.

DE112004000307 T5 décrit un capot avant conformément au préambule de la revendication 1.

Les pattes métalliques qui relient la gâche au capot permettent en se déformant d'absorber l'énergie du choc du piéton sur le capot et de protéger ainsi le piéton contre les risques de blessures graves, lorsque le véhicule circule à faible vitesse.

Dans les brevets ci-dessus, les deux pattes sont rectilignes, c'est-à-dire ne comportent pas de pli.

Dans le cas de l'ensemble décrit dans le document US 2007/7235237, les deux pattes déformables comportent des zones de moindre résistance qui jouent, en cas de choc piéton, le rôle de charnières permettant la rotation de la gâche vers l'arrière.

Cette rotation de la gâche permet de réduire les risques de blessures en cas de choc du piéton sur le capot.

Cependant, les zones de moindre résistance fragilisent les pattes et peuvent provoquer une rupture intempestive de celles-ci par exemple en cas de surclaquage du capot.

Selon les nouvelles normes concernant les chocs piéton sur l'avant d'un véhicule automobile la zone avant du véhicule en particulier dans la zone située dans l'environnement de la serrure du capot doit être suffisamment souple pour ne pas être trop agressive lors de l'impact de :
- la hanche (ou du fémur) d'un piéton adulte,
- la tête d'un enfant.

Il faut également que la liaison entre le capot et la gâche ne se déforme pas, lors de la fermeture, c'est-à-dire du claquage du capot.

A cet effet, il faut trouver un bon compromis entre :
- la rigidité de la liaison ci-dessus lors du claquage du capot,
- la souplesse de cette liaison, lors d'un choc du fémur d'un piéton effectué sous un angle de 30°par rapport à l'horizontale,
- la souplesse de cette liaison, lors d'un choc de la tête d'un enfant effectué sous un angle de 50°par rapport à l'horizontale,
- un encombrement aussi réduit que possible de ladite liaison pour être compatible avec un capot bas.

Le but de la présente invention est de proposer une solution permettant d'obtenir le compromis ci-dessus.

Ce but est atteint, selon l'invention, grâce à un ensemble comportant un capot avant de véhicule automobile et un dispositif pour verrouiller ce capot comprenant une gâche adaptée pour pouvoir se verrouiller à une serrure fixée à une partie rigide de la caisse du véhicule, cette gâche étant reliée à la face intérieure du capot par deux pattes métalliques espacées l'une de l'autre suivant la direction longitudinale du véhicule, ces deux pattes étant déformables en cas de choc d'un piéton sur le capot, caractérisé en ce que la patte située à l'avant de l'autre patte est sensiblement rectiligne et est, lorsque l'ensemble est monté sur le véhicule, inclinée vers l'arrière par rapport à la direction verticale du véhicule, la patte située à l'arrière étant également inclinée vers l'arrière par rapport à la direction verticale et présentant une courbure.

Le fait que la patte avant soit rectiligne lui permet de résister aux efforts engendrés lors du claquage du capot.

Le fait que cette patte soit inclinée vers l'arrière lui permet de pivoter vers l'arrière lors d'un choc du fémur d'un piéton.

Le fait que la patte arrière soit penchée vers l'arrière permet à celle-ci de se déformer en cas de choc de la tête d'un enfant dans une zone du capot proche de la serrure.

Le fait que la patte arrière présente une courbure permet à celle-ci de se déformer en cas de choc de la tête d'un enfant dans une zone du capot légèrement éloignée de la zone de la serrure.

L'invention apporte ainsi la solution au problème évoqué plus haut.

De préférence, la convexité de la courbure de la patte située à l'arrière est dirigée vers la patte située à l'avant.

Dans une version préférée de l'invention, les extrémités des deux pattes déformables opposées au capot sont chacunes reliées à un fil de gâche rigide.

De préférence également, les extrémités des deux pattes déformables sont fixées à une zone du capot qui est exposée au choc de la tête d'un piéton enfant ou au fémur d'un piéton adulte.

Dans un mode de réalisation particulièrement avantageux de l'invention, l'angle d'inclinaison des pattes est compris entre 10 et 30°.

Cet angle d'inclinaison des pattes permet à celles-ci d'être presque perpendiculaires à la direction de l'impact en cas de choc du fémur d'un piéton ou de la tête d'un enfant.

De préférence également, la longueur des pattes est telle que la distance comprise entre la gâche et la peau du capot est comprise entre 100 et 140 mm

De ce fait, cette distance est relativement réduite et est compatible avec un capot bas.

Dans un mode de réalisation préféré de l'invention, lesdites pattes sont constituées chacune par une lame en acier d'épaisseur comprise entre 1 et 1,5 mm, le plan de la lame étant, lorsque l'ensemble est monté sur le véhicule automobile, transversal à l'axe longitudinal du véhicule.

Selon un autre aspect, l'invention concerne également un véhicule automobile équipé d'un ensemble selon l'invention tel que défini ci-dessus.

D'autres particularités et avantages de l'invention apparaîtront encore tout au long de la description ci-après.

Aux dessins annexés, donnés à titre d'exemples, non limitatifs :
- la figure 1 est une vue en perspective d'un ensemble selon l'invention illustrant schématiquement l'impact sur cet ensemble d'un fémur d'un piéton et de la tête d'un enfant,
- la figure 2 est une vue en coupe longitudinale et verticale de l'ensemble selon l'invention,
- la figure 3 est une vue analogue à la figure 2 montrant la déformation de l'ensemble lors d'un choc fémur,
- la figure 4 est une vue analogue à la figure 2 montrant la déformation de l'ensemble, lors d'un choc de la tête d'un enfant dans une zone du capot proche de la serrure,
- la figure 5 est une vue analogue à la figure 2 montrant la déformation de l'ensemble, lors d'un choc de la tête d'un enfant dans une zone du capot éloignée de la serrure.

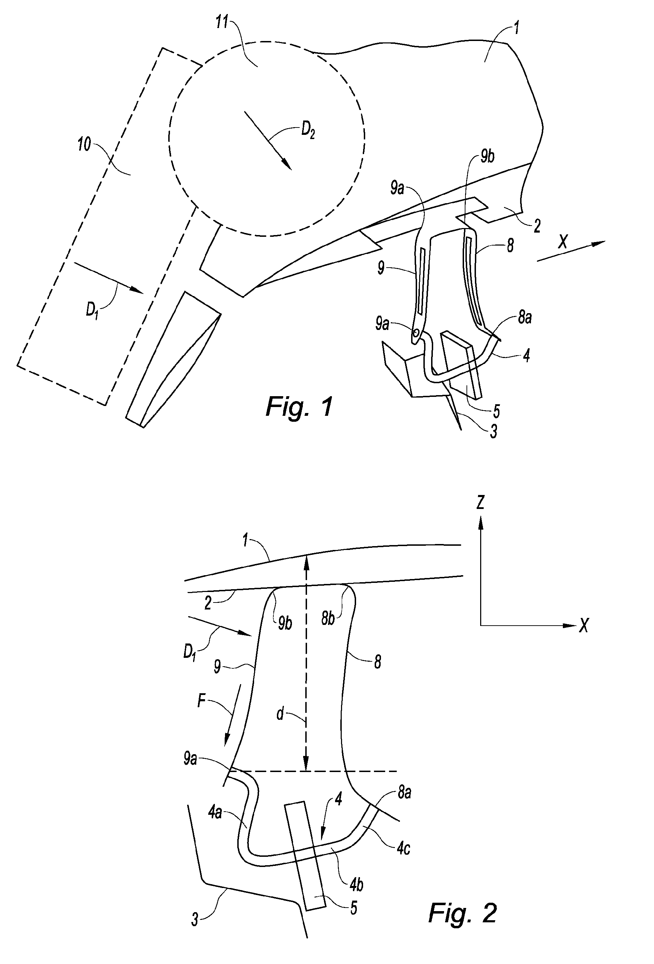

Les figures 1 et 2 représentent un ensemble comportant un capot avant 1 de véhicule automobile et un dispositif pour verrouiller ce capot 1 comprenant une gâche 4 adaptée pour pouvoir se verrouiller à une serrure 5 fixée à une partie rigide 3 de la caisse du véhicule.

La gâche 4 est reliée à la doublure 2 du capot 1 par deux pattes métalliques 8, 9 espacées l'une de l'autre suivant la direction longitudinale X du véhicule.

Ces deux pattes 8, 9 sont déformables en cas de choc d'un piéton sur le capot 1.

Conformément à l'invention, la patte 9 située à l'avant de l'autre patte 8 est sensiblement rectiligne et est, lorsque l'ensemble est monté sur le véhicule, inclinée vers l'arrière par rapport à la direction verticale Z du véhicule.

La patte 8 située à l'arrière est également inclinée vers l'arrière par rapport à la direction verticale Z et présente une courbure.

Les figures 1 et 2 montrent également que la convexité de la courbure de la patte 8 située à l'arrière est dirigée vers la patte 9 située à l'avant.

Les extrémités 8a, 9a des deux pattes déformables 8, 9 opposées au capot 1 sont chacunes soudées à un fil de gâche rigide 4.

Par ailleurs, les extrémités 8b, 9b des deux pattes déformables 8, 9 sont fixées à une zone du capot 1 qui est exposée au choc de la tête d'un piéton enfant ou au fémur d'un piéton adulte.

Sur la figure 1, le rectangle 10 en pointillé symbolise le fémur d'un piéton et le cercle 11 en pointillé symbolise la tête d'un enfant qui selon le test de la norme choc piéton impactent l'avant du véhicule respectivement suivant des directions D1 et D2.

Selon cette norme, la direction D1 du choc fémur est inclinée de 30° par rapport à l'horizontale, tandis que la direction D2 du choc tête est inclinée de 50° par rapport à l'horizontale.

De préférence, l'angle d'inclinaison vers l'arrière des pattes 8, 9 par rapport à l'axe Z est compris entre 10 et 30°.

Par ailleurs, la longueur des pattes 8, 9 est telle que la distance comprise entre le point le plus haut de la gâche 4 et la peau du capot 1 est comprise entre 100 et 140 mm.

En outre, les pattes 8, 9 sont constituées chacune par une lame en acier éventuellement ajourée, d'épaisseur comprise entre 1 et 1,5 mm.

Le plan de la lame est, lorsque l'ensemble est monté sur le véhicule automobile, transversal à l'axe longitudinal X du véhicule.

Dans l'exemple représenté, le fil de gâche 4 présente une partie avant 4a de forme en S, une partie intermédiaire 4b de forme rectiligne et une partie arrière 4c inclinée vers le haut.

La forme du fil de gâche 4 est adaptée pour éviter toute interférence avec la partie rigide 3 de la caisse du véhicule.

Lors de la fermeture, c'est-à-dire du claquage du capot 1, les efforts sont transmis vers le fil de gâche 4 dans le sens de la flèche F, représentée sur la figure 2.

Du fait qu'elle soit rectiligne, la patte avant 9 résiste sans se déformer aux efforts ci-dessus.

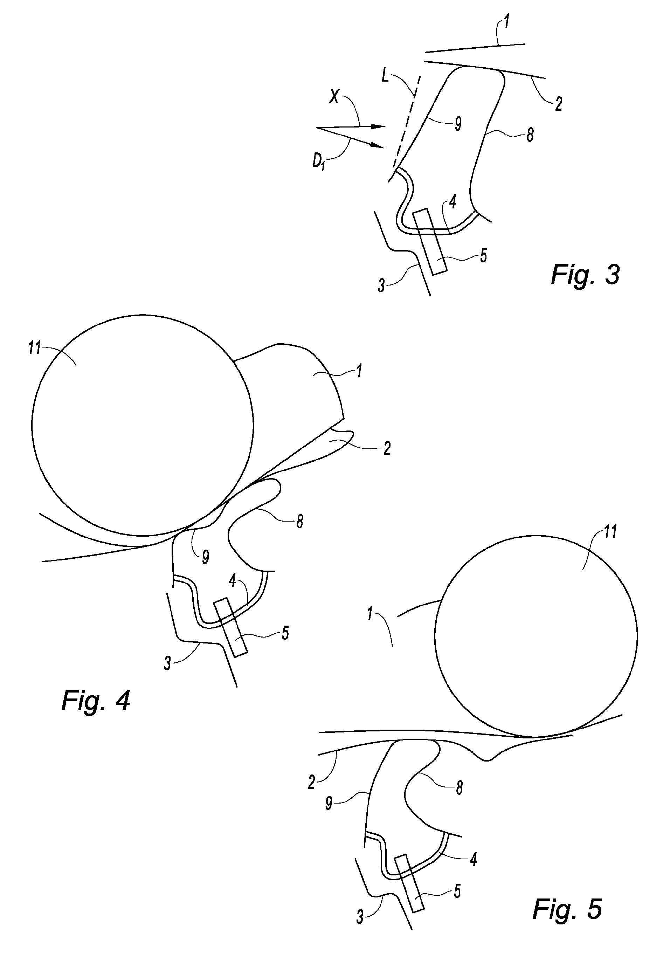

La figure 3 illustre le cas d'un choc fémur.

Sur cette figure, la ligne en pointillé L représente la position initiale de la patte avant 9.

Le choc fémur est appliqué dans la direction D1 formant un angle de 30° par rapport à la direction X.

Du fait de l'inclinaison vers l'arrière des pattes 8 et 9, la direction D1 d'application du choc fémur est sensiblement perpendiculaire aux pattes 8 et 9.

Cette inclinaison des pattes 8 et 9 favorise ainsi leur pivotement vers l'arrière, comme montré par la figure 3, qui permet d'absorber l'énergie du choc fémur.

Les figures 4 et 5 illustrent le cas de l'impact sur le capot 1 de la tête 11 d'un enfant respectivement dans une zone proche de la serrure 5 (voir figure 4) et dans une zone légèrement éloignée vers l'arrière de cette zone.

Dans les deux cas, les pattes 8 et 9, sous l'effet de l'impact, se replient vers l'arrière pour amortir le choc.

Dans les deux cas, l'inclinaison initiale vers l'arrière des deux pattes 8 et 9 et la courbure de la patte arrière 8 favorisent la déformation des deux pattes.

Un autre avantage de l'invention réside dans le fait que la distance d comprise entre la peau du capot 1 et le fil de gâche 4 soit inférieure à 140 mm.

En effet, cette distance réduite permet de maintenir le profil bas du capot 1, c'est-à-dire évite de rehausser celui-ci pour pouvoir installer les pattes 8, 9.

## Revendications

1. Ensemble comportant un capot avant (1) de véhicule automobile et un dispositif pour verrouiller ce capot (1) comprenant une gâche (4) adaptée pour pouvoir se verrouiller à une serrure (5) fixée à une partie rigide de la caisse du véhicule, cette gâche (4) étant reliée à la face intérieure du capot (1) par deux pattes métalliques (8, 9) espacées l'une de l'autre suivant la direction longitudinale (X) du véhicule, ces deux pattes (8, 9) étant déformables en cas de choc d'un piéton sur le capot (1), **caractérisé en ce que** la patte (9) située à l'avant de l'autre patte (8) est sensiblement rectiligne et est, lorsque l'ensemble est monté sur le véhicule, inclinée vers l'arrière par rapport à la direction verticale (Z) du véhicule, la patte (8) située à l'arrière étant également inclinée vers l'arrière par rapport à la direction verticale (Z) et présentant une courbure.

2. Ensemble selon la revendication 1, **caractérisé en ce que** la convexité de la courbure de la patte (8) située à l'arrière est dirigée vers la patte (9) située à l'avant.

3. Ensemble selon l'une des revendications 1 ou 2, **caractérisé en ce que** les extrémités (8a, 9a) des deux pattes déformables (8, 9) opposées au capot (1) sont chacunes reliées à un fil de gâche rigide (4).

4. Ensemble selon l'une des revendications 1 à 3, **caractérisé en ce que** les extrémités (8b, 9b) des deux pattes déformables (8, 9) sont fixées à une zone du capot (1) qui est exposée au choc de la tête d'un piéton enfant ou au fémur d'un piéton adulte.

5. Ensemble selon l'une des revendications 1 à 4, **caractérisé en ce que** l'angle d'inclinaison des pattes (8, 9) est compris entre 10 et 30°.

6. Ensemble selon l'une des revendications 1 à 5, **caractérisé en ce que** la longueur des pattes (8, 9) est telle que la distance (d) comprise entre la gâche (4) et la peau du capot (1) est comprise entre 100 et 140 mm.

7. Ensemble selon l'une des revendications 1 à 6, **caractérisé en ce que** lesdites pattes (8, 9) sont constituées chacune par une lame en acier d'épaisseur comprise entre 1 et 1,5 mm, le plan de la lame étant, lorsque l'ensemble est monté sur le véhicule automobile, transversal à l'axe longitudinal (X) du véhicule.

8. Véhicule automobile équipé d'un ensemble selon l'une des revendications 1 à 7.

## Patentansprüche

1. Anordnung, umfassend eine Fronthaube (1) eines Kraftfahrzeugs und eine Vorrichtung, um diese Haube (1) zu verriegeln, umfassend ein Schließblech (4), das ausgelegt ist, um an ein Schloss (5) verriegeln werden zu können, das an einen starren Teil der Fahrzeugkarosserie befestigt ist, wobei dieses Schließblech (4) mit der inneren Seite der Haube (1) durch zwei Metalllaschen (8, 9) verbunden ist, die voneinander in der Längsrichtung (X) des Fahrzeugs beabstandet sind, wobei diese zwei Laschen (8, 9) im Fall des Aufpralls eines Fußgängers auf die Haube (1) verformbar sind, **dadurch gekennzeichnet, dass** die Lasche (9), die sich vor der anderen Lasche (8) befindet, im Wesentlichen geradlinig ist und, wenn die Anordnung auf dem Fahrzeug montiert ist, nach hinten mit Bezug auf die vertikale Richtung (Z) des Fahrzeugs geneigt ist, wobei die Lasche (8), die sich hinten befindet, ebenfalls nach hinten mit Bezug auf die vertikale Richtung (Z) geneigt ist und eine Krümmung aufweist.

2. Anordnung nach Anspruch 1, **dadurch gekennzeichnet, dass** die Konvexität der Krümmung der Lasche (8), die sich hinten befindet, auf die Lasche (9) gerichtet ist, die sich vorne befindet.

3. Anordnung nach einem der Ansprüche 1 oder 2, **dadurch gekennzeichnet, dass** die Enden (8a, 9a) der zwei verformbaren Laschen (8, 9), die der Haube (1) gegenüber liegen, jeweils mit einem starren Schließblech-Draht (4) verbunden sind.

4. Anordnung nach einem der Ansprüche 1 bis 3, **dadurch gekennzeichnet, dass** die Enden (8b, 9b) der zwei verformbaren Laschen (8, 9) an einen Bereich der Haube (1) befestigt sind, der dem Aufprall des Kopfes eines kindlichen Fußgängers oder des Oberschenkels eines erwachsenen Fußgängers ausgesetzt ist.

5. Anordnung nach einem der Ansprüche 1 bis 4, **dadurch gekennzeichnet, dass** der Neigungswinkel der Laschen (8, 9) zwischen 10 und 30° liegt.

6. Anordnung nach einem der Ansprüche 1 bis 5, **dadurch gekennzeichnet, dass** die Länge der Laschen (8, 9) derart ist, dass der Abstand (d) zwischen dem Schließblech (4) und der Haut der Haube (1) zwischen 100 und 140 mm liegt.

7. Anordnung nach einem der Ansprüche 1 bis 6, **dadurch gekennzeichnet, dass** die Laschen (8, 9) jeweils aus einem Stahlblatt mit einer Dicke zwischen 1 und 1,5 mm bestehen, wobei die Ebene des Blatts, wenn die Anordnung auf das Kraftfahrzeug montiert ist, quer zur Längsachse (X) des Fahrzeugs ist.

8. Kraftfahrzeug, das mit einer Anordnung nach einem der Ansprüche 1 bis 7 ausgestattet ist.

## Claims

1. Assembly comprising a front motor vehicle bonnet (1) and a device for locking this bonnet (1) including a striker (4) that can be locked onto a lock (5) attached to a rigid portion of the vehicle body shell, with this striker (4) connected to the inner surface of the bonnet (1) via two metal lugs (8, 9) spaced apart from each other in the longitudinal direction (X) of the vehicle, with these two lugs (8, 9) being deformable in the event of pedestrian impact on the bonnet (1), **characterised in that** the lug (9) located in front of the other lug (8) is substantially rectilinear and is, when the assembly is mounted onto the vehicle, inclined towards the rear relative to the vertical direction (Z) of the vehicle, with the lug (8) located at the rear also being inclined toward the rear relative to the vertical direction (Z) and having a curvature.

2. Assembly according to claim 1, **characterised in that** the convexity of the curvature of the lug (8) located at the rear is directed towards the lug (9) located at the front.

3. Assembly according to one of claims 1 or 2, **characterised in that** the ends (8a, 9a) of the two deformable lugs (8, 9) opposite the bonnet (1) are each connected to a rigid striker wire (4).

4. Assembly according to one of claims 1 to 3, **characterised in that** the ends (8b, 9b) of the two deformable lugs (8, 9) are attached to a zone of the bonnet (1) which is exposed to the impact of the head of a child pedestrian or to the femur of an adult pedestrian.

5. Assembly according to one of claims 1 to 4, **characterised in that** the angle of inclination of the lugs (8, 9) is between 10 and 30°.

6. Assembly according to one of claims 1 to 5, **characterised in that** the length of the lugs (8, 9) is such that the distance (d) between the striker (4) and the skin of the bonnet (1) is between 100 and 140 mm.

7. Assembly according to one of claims 1 to 6, **characterised in that** said lugs (8, 9) are each comprised of a steel blade of a thickness between 1 and 1.5 mm, with the plane of the blade being, when the assembly is mounted on the vehicle automobile, transversal to the longitudinal axis (X) of the vehicle.

8. Motor vehicle provided with an assembly according to one of claims 1 to 7.
